# EUROPÄISCHE PATENTSCHRIFT

(11) **EP 0 879 330 B1**
(45) Veröffentlichungstag und Bekanntmachung des Hinweises auf die Patenterteilung: **22.03.2000**
(21) Anmeldenummer: 96943849.8
(22) Anmeldetag: 30.08.1996
(51) Int. Cl.: E04C 3/36, E04C 3/29

(54) **HOHLPROFILFÖRMIGES TRAGELEMENT FÜR DIE BAUTECHNIK**
SUPPORT MEMBER IN THE FORM OF A HOLLOW SECTION FOR USE IN CONSTRUCTION
ELEMENT PORTEUR SOUS FORME DE PROFILE CREUX POUR TECHNIQUE DE CONSTRUCTION

(30) Priorität: 01.09.1995 DE 19533501; 29.03.1996 DE 19613699
(43) Veröffentlichungstag der Anmeldung: 25.11.1998
(73) Patentinhaber: Sager, Jürgen, 17139 Neu Panstorf (DE)
(72) Erfinder: Sager, Jürgen, 17139 Neu Panstorf (DE)
(74) Vertreter: Fleischer, Harald
(86) Internationale Anmeldenummer: DE9601656
(87) Internationale Veröffentlichungsnummer: WO9710394

(56) Entgegenhaltungen:
- EP-A- 0 033 187
- EP-A- 0 138 165
- CH-A- 360 191
- DE-A- 1 704 926
- FR-A- 2 086 337
- US-A- 1 473 842
- US-A- 3 238 690
- US-A- 3 810 337
- US-A- 3 813 837

## Beschreibung

Die Erfindung betrifft ein langgestrecktes, hohles Bauelement mit einem über die gesamte Länge unverändert bleibenden Querschnitt, das auf Biegung oder Druck beansprucht werden kann. Es kann als Pfeiler oder Träger in der Bautechnik eingesetzt werden.

Für tragende Bauwerke in der Bautechnik werden im allgemeinen Bauteile aus Holz, Leichtmetall, Stahl oder Stahlbeton verwendet. Diese Bauteile können massiv oder als Hohlprofile ausgebildet sein.

Die Bauteile aus Leichtmetall, Stahl und Stahlbeton erfordern bei der Herstellung einen großen Energieeinsatz und sind bei einem späteren Abriß einer besonderen Behandlung für die Verwertung oder Entsorgung zuzuführen.

Bauteile aus Holz, die seit langem in der Bautechnik verwendet werden, sind bei entsprechender Dimensionierung oder entsprechender Verarbeitung, etwa als geleimtes Schichtholz, auch für höher Belastungen einsetzbar. Die Ressourcen an Holz sind aber begrenzt, insbesondere für Balken größeren Querschnitts.

Die Begrenztheit der Rohstoffe, der hohe Energieeinsatz und die Probleme bei der Entsorgung betreffen ebenso Bauteile aus Kunststoffprofilen.

Es sind Bauelemente bekannt, die, um den Materialeinsatz zu optimieren, aus verschiedenen Werkstoffschichten bestehen. In der DE 2451526 ist ein solches Bauelement vorgeschlagen, bei dem auf einem Pappkern mehrere Schichten Glasfasern und eine Kunststoffbeschichtung aufgebracht ist. Der Pappkern dient dabei, wie bei Laminaten bekannt, lediglich als Form.

In der US-PS 52 45 813 ist ein Bauträger beschrieben, der aus einem Kern mit einer Vielzahl von Umhüllungen aus schrumpffähigen Material besteht und bei dem in einer Ausführungsform sich Zwischenlagen aus Fasermaterial zwischen einzelnen Lagen des schrumpffähigen Materials befinden. Nach dem Wickeln wird der Wickelkörper einer Wärmebehandlung unterzogen, in deren Ergebnis ein kompakter Bauträger entsteht.

Der Bauträger nach der US-PS 52 45 813 hat den Nachteil, daß der Querschnitt des durch das Schrumpfen entstehenden Bauelements über die Länge des Trägers nicht konstant ist und auch die Festigkeitseigenschaften wegen der mit dem Schrumpfen zu erwartenden Unstetigkeiten über die Länge des Trägers schwanken. Darüber hinaus erfordert die Herstellung (speziell die Wärmebehandlung) einen hohen Energieaufwand.

In der US-PS 3 238 690 ist ein Bauträger beschrieben, der aus einem oder mehreren U-profilförmigen Einzelteilen gebildet ist, die miteinander oder mit einem flachen Element, mit dem die Öffnung des Profils verschlossen wird, zu einem Hohlprofil verbunden sind. Die U-Profile bestehen aus einer Vielzahl von Lagen aus Papier. Dieser Bauträger hat den Nachteil, daß wegen der mit dem Verbinden von wenigstens zwei Teilen zu einem Träger zu erwartenden Unstetigkeiten die Festigkeitseigenschaften über die Länge des Trägers schwanken und darüber hinaus von der Richtung der Belastung abhängen. Darüber hinaus erfordert die Herstellung einen hohen fertigungstechnischen Aufwand.

Aus der DE-AS 1 191 540 ist ein stabförmiges Bauelement aus verklebten Holzröhren bekannt, bei dem die zwischen den Röhren befindlichen Räume mit einer Klebmasse ausgefüllt sind. Das stabförmige Bauelement kann einen inneren, mit Kunststoff- oder Aluminiumfolie ausgekleideten Hohlraum aufweisen, der mit Querscheiben ausgesteift ist. Die untere Hälfte des Bauelements wird durch Einlegen der Holzröhren in eine Unterform und anschließendem Verkleben der Rohre hergestellt. Die obere Hälfte wird dann gleichen aufgebaut. Die äußere Hülle wird durch Umwickeln mit einem Folienband hergestellt.

Die nach der DE-AS 1 191 540 hergestellten Bauelement haben den Nachteil, daß die Herstellung nur mit hohem manuellen Aufwand verbunden ist und hohlprofilförmige Tragelemente auf diese Weise nicht herstellbar sind.

Weiterhin sind seit längerem Rohre aus gewickelten Papierbahnen bekannt. Diese werden als Hülsen, Spindeln oder Kerne für zu wickelndes Gut wie Bodenbeläge, Garne usw. verwendet. Sie besitzen dafür eine ausreichende Festigkeit durch entsprechende Verleimung, sind aber aufgrund ihrer streuenden Festigkeit für die Verwendung im Bauwesen nicht geeignet.

Bekannt ist ebenfalls die Verwendung von Papprohren als "verlorene Form" für das Gießen von Betonstützen oder Säulen.

Aufgabe der Erfindung ist es, ein hohlprofilförmiges Tragelement aus im wesentlichen nachwachsenden Rohstoffen bzw. Restmaterialien davon oder Abfallmaterial zu schaffen, das eine ausreichende Festigkeit und Beständigkeit besitzt, in Größe und Tragfähigkeit variabel herstellbar und einfach wiederverwertbar und entsorgbar ist.

Gelöst wird diese Aufgabe dadurch, daß ein hohlprofilförmiges Tragelement für tragende Bauteile in der Bautechnik aus mindestens einem Grundkörper aus schichtförmig zu einem Hohlprofil gewickelten und miteinander verbundenen Lagen eines flächigen Werkstoffs bestehen, wobei
- die Wandung des Grundkörpers aus einer Vielzahl von Lagen aus Papier besteht,
- die Lagen aus Bahnen, die überlappend wendelförmig gewickelt sind, bestehen,
- die Lagen mit wasserfestem Kleber verbunden sind
- der Querschnitt des Tragelements über die gesamte Länge gleich ist.

Um die Festigkeit des hohlprofilförmigen Tragelements weiter zu erhöhen, kann es in Längsrichtung vorgespannt werden.

Mit dieser Erfindung ist ein belastbares rohrförmiges Bauelement aus Papier geschaffen, das auf bekannten Wickelmaschinen in endlosen Längen günstig herstellbar ist. Die Abmaße sind leicht durch den Wickelkern und die Festigkeit durch die Anzahl und das Material der Lagen sowie durch die Anordnung einer Vorspanneinrichtung und durch die Höhe der Vorspannung zu variieren. Die Vorspannung gewährleistet, daß das Bauelement innerhalb gewisser Belastungsgrenzen ausschließlich auf Druck beansprucht wird. Durch die Verwendung von natürlichen Faserstoffen als Material für das Tragelement erfolgt gegenüber herkömmlichen Materialien (Stahl, Beton, Stahlbeton, Leichtmetall) eine Reduzierung der Eigenmasse und/oder eine Senkung der Werkstoffkosten.

Spezielle Ausgestaltungen der Erfindung sind in den Unteransprüchen dargelegt.

Nachfolgend wird die Erfindung an Ausführungsbeispielen erläutert.

Die Figur 1 zeigt ein hohlprofilförmiges Tragelement in der Seitenansicht im Schnitt.

Die Figur 2 zeigt eine Draufsicht eines aus mehreren koaxialen Rohren bestehenden Bauelements.

Die Figur 3 zeigt eine Draufsicht eines aus mehreren achsparallelen Rohren bestehenden Bauelements.

Die Figuren 4, 5 und 6 zeigen hohlprofilförmige Tragelemente (geschnitten) nach Fig. 1 oder 2 mit einer Vorspanneinrichtung.

Die Figuren 7, 8, 9 10, 11 und 12 zeigen hohlprofilförmige Tragelemente im Schnitt entlang der Linie B-B nach Fig. 3 mit Vorspanneinrichtungen.

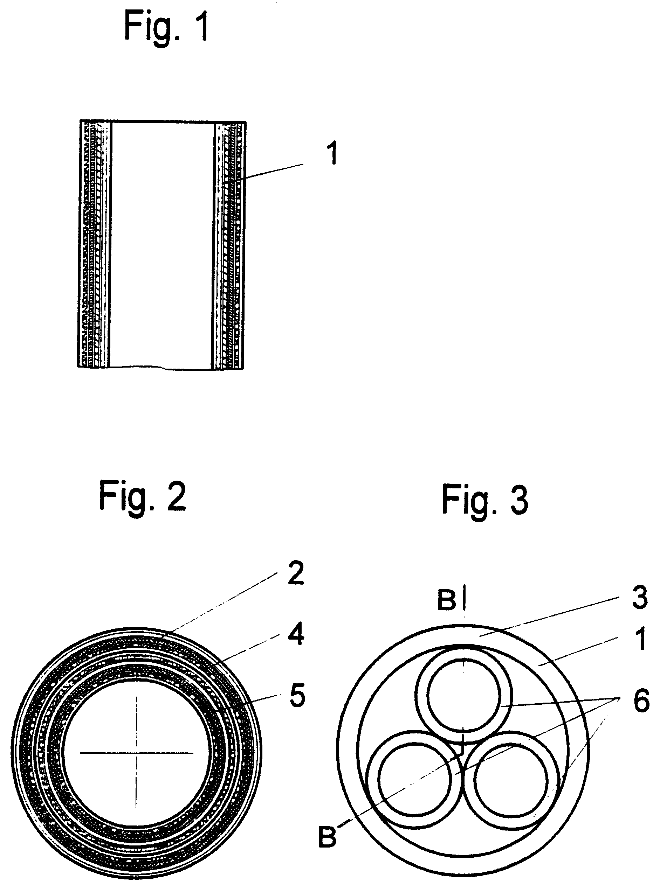

Die Wandung des Grundkörpers 1 des rohrförmigen Bauelements (Fig. 1) besteht aus einer Vielzahl von Lagen aus wendelförmig gewickelten Bahnen. Diese überlappen sich und die Überlappungen jeder Schicht sind gegeneinander versetzt. Damit wird eine relativ gleichmäßige Struktur erzeugt. Die Bahnen sind mit einem wasserlöslichen Leim, der im ausgehärtetem Zustand wasserunlöslich ist, oder mit einem Kunstharzkleber, verleimt. Sie bestehen aus Papier mit z.B. einer Dicke von 0,2 - 1,0 mm und einer Breite von 70 - 150 mm. Die Abmaße der Bahnen sind nicht auf die angegebenen Bereiche beschränkt. Das Papier kann aus wiederaufbereitetem Altpapier oder anderen Fasern pflanzlicher Herkunft bestehen, wobei auch diese aus Rest- und Abfallstoffen anderer Nutzungen gewonnen werden können. Mehrere mit radialem Abstand eingebrachte Bahnen mit den gleichen Abmessungen sind aus einem Glasfasergewebe (Roving) oder aus einem Gewebe aus natürlichen Fasern (Leinen, Seide, Baumwolle usw.) gefertigt. Ein Rohr ab einem Innendurchmesser von 15 mm kann eine Wandstärke von 20 mm oder größer besitzen. Ein Rohr mit einem Außendurchmesser 100 mm kann eine Wandstärke von etwa 20 mm besitzen. Die Rohrwandung besteht dabei aus bis zu 100 Lagen, wobei das Material aus Altpapier, Glasfasern, Gewebe aus natürlichen Fasern und Leim oder Kunstharz zusammengesetzt ist. Die letzte äußere Lage des Grundkörpers 1 kann aus einem wasserfestem Material wie Pergament, Kunststoff- oder Metallfolie bestehen. Ein solches Tragelement ist für mittlere Belastungen einsetzbar.

Aus mehreren Grundkörpern gemäß Fig. 1 können Verbundträger 2 und 3 gemäß Fig. 2 und 3 gefertigt werden. Fig. 2 zeigt einen Verbundträger 2 der aus zwei Grundkörpern 4 und 5 besteht, bei denen der Außendurchmesser des kleineren Grundkörpers 5 etwa dem Innendurchmesser des größeren Grundkörpers 4 entspricht und die koaxial ineinander geschoben und verleimt sind. Mit diesem Lösungsprinzip können große Wandstärken erzielt werden. Ein so hergestellter Träger ist für höheren Belastungen einsetzbar.

Fig. 3 zeigt einen Verbundträger 3, bei dem in einen Grundkörper 1 mit großem Durchmesser drei oder mehr Grundkörper 6 mit kleinerem Durchmesser achsparallel eingeschoben und gegebenenfalls verklebt sind. Dieser Verbundträger ist besonders für Tragelemente größeren Durchmessers geeignet. Es besitzt dadurch eine hohe Steifigkeit bei geringem Gewicht. Die kleineren Tragelemente sind unter leichtem Druck in das große Tragelement eingepreßt. Eine zusätzliche Verbindung ist durch vorheriges Aufbringen von Leim oder Kunstharzkleber möglich.

Das Tragelement kann zum Erzielen besonderer Eigenschaften besonderen Behandlungen unterzogen werden. So kann das Tragelement mit einer isolierenden Masse aus naturnahen oder natürlichen Stoffen ausgefüllt sein.

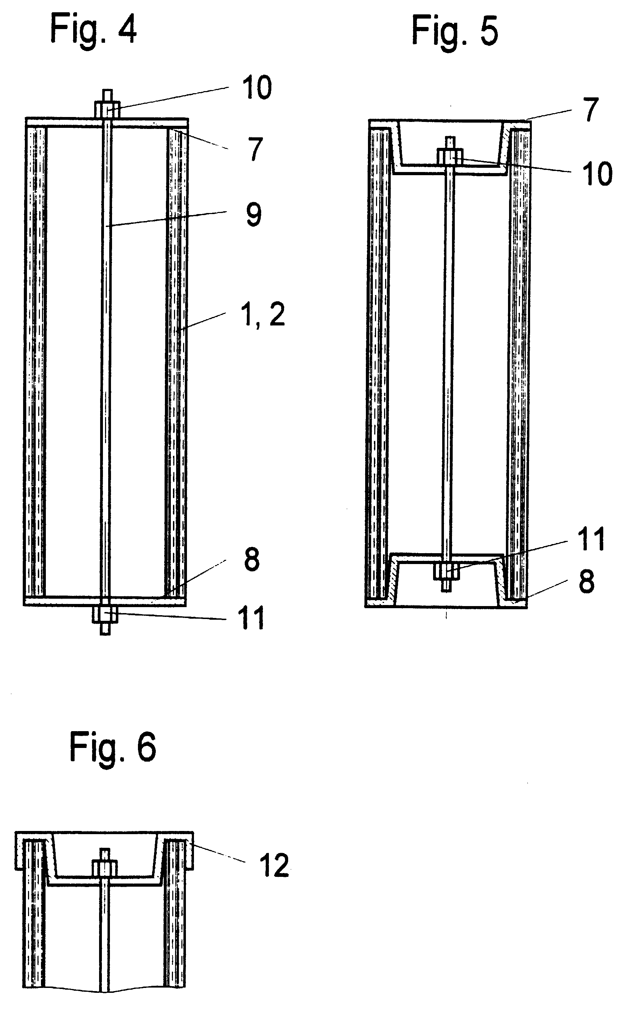

Die Fig. 4 zeigt ein hohlprofilförmiges Tragelement nach Fig. 1 oder 2 mit einer Vorspanneinrichtung. An den Enden der Grundkörper 1 oder 2 sind runde Platten 7 und 8 angeordnet, deren Durchmesser dem Außendurchmesser der Grundkörper 1 oder 2 entspricht und die in der Mitte ein Bohrung aufweisen. Durch die Bohrung ist ein an beiden Enden mit einem Gewinde ausgerüsteter Zugstab 9 geführt, der mittels der Spannmuttern 10 und 11 über die Platten 7 und 8 eine Druckspannung auf den Grundkörper 1 oder 2 aufbringt.

In Fig. 5 ist ein hohlprofilförmiges Tragelement nach Fig. 1 oder 2 mit einer Vorspanneinrichtung dargestellt, bei dem die runden Platten 7 und 8 topfförmig gestaltet sind, so daß die Spannmuttern 10 und 11 innerhalb der äußeren Kontur des Grundkörpers angeordnet sind.

In Fig. 6 ist ein hohlprofilförmiges Tragelement nach Fig. 1 oder 2 mit einer Vorspanneinrichtung dargestellt, bei dem die runden Platten 7 und 8 topfförmig und mit einer über die Außenwand des Grundkörpers 1 oder 2 gestülpten Krempe 12 gestaltet sind, so daß die Spannmuttern 10 und 11 innerhalb der äußeren Kontur des Grundkörpers angeordnet sind und das hohlprofilförmige Tragelement an seinen Enden, die in der Regel mit anderen Elementen in umfangreicheren Tragkonstruktionen verbunden sind, verstärkt ist. Die Krempe 12 kann auch geteilt sein oder aus mehreren Streifen bestehen.

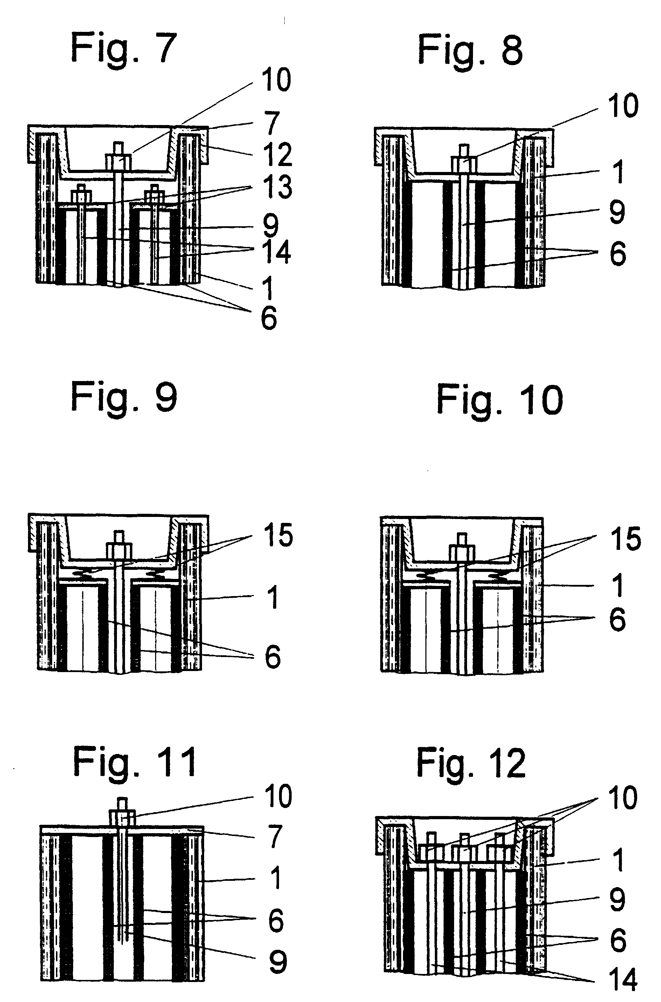

In Fig. 7 ist ein hohlprofilförmiges Tragelement nach Fig. 3 mit Vorspanneinrichtungen dargestellt, bei dem jeder der Grundkörper 1 und 6 mit runden Platten 7 und 13, Zugstangen 9 und 14 und Muttern 10 vorgespannt ist. Die runde Platte 7 kann dabei topfförmig und mit oder ohne Krempe 12 gestaltet sein.

Fig. 8 zeigt ein hohlprofilförmiges Tragelement nach Fig. 3 mit Vorspanneinrichtungen, bei dem die Grundkörper 1 und 6 mit einer runden Platten 7, einer Zugstange 9 und mit Spannmuttern 10 vorgespannt sind.

In den Figuren 9 und 10 ist ein hohlprofilförmiges Tragelement nach Fig. 3 mit Spanneinrichtungen dargestellt, bei dem die erforderliche Spannkraft durch die Zugstange 9, die Spannmutter 10 und die Platte 7 auf den Grundkörper 1 und über Federelemente 15, die zwischen der Unterseite der Platte 7 und den Platten 13 angeordnet sind, auf die Grundkörper 6 übertragen wird.

Fig. 11 zeigt ein hohlprofilförmiges Tragelement nach Fig. 3 mit Vorspanneinrichtungen, bei dem die Grundkörper 1 und 6 mit einer runden Platten 7, einer Zugstangen 9 und mit Spannmuttern 10 vorgespannt sind.

Fig. 12 zeigt ein hohlprofilförmiges Tragelement nach Fig. 3 mit Vorspanneinrichtungen, bei dem die Grundkörper 1 und 6 mit einer runden Platten 7, Zugstangen 9 und 14, sowie mit Spannmuttern 10 vorgespannt sind.

Die Figuren 6 bis 12 zeigen jeweils nur ein Endstück des hohlprofilförmigen Tragelements. Das nicht dargestellte Endstück entspricht dem dargestellten.

## Patentansprüche

1. Hohlprofilförmiges Tragelement für tragende Bauteile in der Bautechnik, wie Pfeiler oder Träger, bestehend aus zumindest einem Grundkörper aus schichtförmig zu einem Hohlprofil gewickelten und miteinander verbundenen Lagen eines flächigen Werkstoffs, dadurch gekennzeichnet, daß
• die Wandung des Grundkörpers aus einer Vielzahl von Lagen aus Papier besteht,
• die Lagen aus Bahnen, die überlappend wendelförmig gewickelt sind, bestehen,
• die Lagen mit wasserfestem Kleber verbunden sind
• der Querschnitt des Tragelements (1) über die gesamte Länge gleich ist.

2. Hohlprofilförmiges Tragelement für die Bautechnik nach Anspruch 1, dadurch gekennzeichnet, daß zwischen mehreren Lagen aus Papier jeweils eine Lage Gewebe, bestehend aus Naturfasern oder künstlichen Fasern, angeordnet ist.

3. Hohlprofilförmiges Tragelement für die Bautechnik nach einem der Ansprüche 1 oder 2, dadurch gekennzeichnet, daß der Grundkörper des Tragelements (1) durch einen Verbundträger (2) gebildet wird, der aus zwei Grundkörpern (4, 5) besteht, bei denen der Außendurchmesser des kleineren Grundkörpers (5) etwa dem Innendurchmesser des größeren Grundkörpers (4) entspricht und die koaxial ineinander geschoben und verleimt sind.

4. Hohlprofilförmiges Tragelement für die Bautechnik nach einem der Ansprüche 1 bis 3, dadurch gekennzeichnet, daß der Grundkörper des Tragelements (1) durch einen Verbundträger (3) gebildet wird bei dem in einen Grundkörper (1) mit großem Durchmesser drei oder mehr Grundkörper (6) mit kleinerem Durchmesser achsparallel eingeschoben und verklebt sind.

5. Hohlprofilförmiges Tragelement für die Bautechnik nach einem der Ansprüche 1 bis 4, dadurch gekennzeichnet, daß die Außenwand des Tragelementes mit wasserfesten oder feuerhemmenden Stoffen wie Kunstharz, Wasserglas, Borsalzlösungen o.ä. getränkt oder beschichtet ist.

6. Hohlprofilförmiges Tragelement für die Bautechnik nach einem der Ansprüche 1 bis 5, dadurch gekennzeichnet, daß das Tragelement (1) in Längsrichtung vorgespannt ist.

7. Hohlprofilförmiges Tragelement nach den Ansprüchen 1 bis 6, dadurch gekennzeichnet, daß
• an den Enden der Grundkörper (1, 2, 3) der Tragelemente runde Platten (7, 8) angeordnet sind, deren Durchmesser dem Außendurchmesser der Grundkörper (1, 2, 3) entspricht und die in der Mitte ein Bohrung aufweisen
• durch die Bohrung ein an beiden Enden mit einem Gewinde ausgerüsteter Zugstab (9) geführt ist, der mittels der Spannmuttern (10, 11) über die Platten (7, 8) eine Druckspannung auf den Grundkörper (1, 2, 3) aufbringt.

8. Hohlprofilförmiges Tragelement nach den Ansprüchen 1 bis 7, dadurch gekennzeichnet, daß die runden Platten (7, 8) topfförmig gestaltet sind, so daß die Spannmuttern (10, 11) innerhalb der äußeren Kontur der Grundkörpers (1, 2, 3) angeordnet sind.

9. Hohlprofilförmiges Tragelement nach Ansprüchen 1 bis 8, dadurch gekennzeichnet, daß die runden Platten (7, 8) topfförmig und mit einer über die Außenwand der Grundkörpers (1, 2, 3) gestülpte Krempe (12) gestaltet sind, so daß die Spannmuttern (10, 11) innerhalb der äußeren Kontur der Grundkörpers (1, 2, 3) angeordnet sind.

10. Hohlprofilförmiges Tragelement nach den Ansprüchen 1 bis 8, dadurch gekennzeichnet, daß beim Verbundträger (3) jeder der Grundkörper (1, 6) mittels runder Platten (7) bzw. (13), Zugstangen (9) bzw. (14) und Muttern (10, 11) vorgespannt ist.

11. Hohlprofilförmiges Tragelement nach den Ansprüchen 1 bis 10, dadurch gekennzeichnet, daß beim Verbundträger (3) die Grundkörper (1, 6) mit einer runden Platten (7), einer Zugstangen (9) und mit Spannmuttern (10, 11) vorgespannt sind.

12. Hohlprofilförmiges Tragelement nach den Ansprüchen 1 bis 11, dadurch gekennzeichnet, daß beim Verbundträger (3) die erforderliche Spannkraft durch die Zugstange (9), die Spannmuttern (10, 11) und die Platten (7, 8) auf den Grundkörper (1) und über Federelemente (15), die zwischen der Unterseite der Platten (7, 8) und den Platten 13 angeordnet sind, auf die Grundkörper (6) übertragen wird.

13. Hohlprofilförmiges Tragelement nach den Ansprüchen 1 bis 12, dadurch gekennzeichnet, daß beim Verbundträger (3) die erforderliche Spannkraft durch die Zugstangen (9) und (14), die Spannmuttern (10, 11) und die Platte (7, 8) auf den Grundkörper (1) und die Grundkörper (6) übertragen wird.

## Claims

1. A hollow section support member for structural engineering,such as beams and buttresses, consisting of layers of a two-dimensional material, which are wrapped around one another in a layered fashion and linked with one another so as to form a hollow section, wherein
- the wall of the support member consists of a plurality of layers of paper,
- said layers consist of sheets, which are wrapped in a spirally overlapping fashion,
- said layers are linked together with a waterproof adhesive and
- the cross-section of the support member (1) is equal over the entire length.

2. The hollow section support member for structural engineering of claim 1, wherein layers of fabric consisting of natural or synthetic fibers are disposed between several of said layers of paper.

3. The hollow section support member for structural engineering of any of claim 1 or 2, wherein the basic body of the support member (1) is formed by a composite support member (2), which consists of two basic bodies (4,5), of which the external diameter of the smaller basic body (5) is approximately the same as the internal diameter of the larger basic body (4) and which are inserted coaxially into one another and glued there.

4. The hollow section support member for structural engineering of any of claim 1 to 3, wherein the basic body of the support element (1) is formed by a composite support member (3), where three or more of said basic bodies (6) of smaller diameter are inserted in a parallel axial direction into said basic body (1) of larger diameter and glued there.

5. The hollow section support member for structural engineering of any of claim 1 to 4, wherein the outer wall of said support member is impregnated or coated with waterproofing and flame-inhibiting materials, such as synthetic resin, water glass, borate salt solutions, etc.

6. The hollow section support member for structural engineering of any of claim 1 to 5, wherein said support member (1) is prestressed in the longitudinal direction.

7. The hollow section support member for structural engineering of any of claim 1 to 6, wherein
- at the ends of said basic bodies (1,2,3) of said support members round plates (7,8) are mounted, the diameter of which equals the external diameter of said basic bodies (1,2,3) and which have a borehole in their center,
- a tension rod (9) which is provided with a thread at each end and exerts a compressive stress on said basic bodies (1,2,3) over said plates (7,8)by means of clamping nuts (10,11), is passed through said borehole.

8. The hollow section support member for structural engineering of any of claim 1 to 7, wherein said round plates (7,8) are pot-shaped to enable said clamping nuts (10,11) to be arranged within the outer contour of said basic bodies (1,2,3).

9. The hollow section support member for structural engineering of any of claim 1 to 8, wherein said round plates (7,8) are pot-shaped and provided with a rim (12) put over the outer wall of said basic bodies (1,2,3) to enable said tensioning nuts (10,11) to be arranged within the outer contour of said basic bodies (1,2,3).

10. The hollow section support member for structural engineering of any of claim 1 to 8, wherein each of said basic members (1,6) of the composite support member (3) is pre-tensioned by means of said round plates(7) or (13), tension rods (9) or (14) and nuts (10,11).

11. The hollow section support member for structural engineering of any of claim 1 to 10, wherein said basic bodies (1,6) of the composite support (3) are pre-tensioned by means of said round plate (7), said tension rod (9) and tension nuts (10,11).

12. The hollow section support member for structural engineering of any of claim 1 to 11, wherein the tensioning force necessary for said composite support member (3) is transferred by said tensioning rod (9), said tensioning nuts (10,11) and the plates (7,8) to said basic body (1) and over the spring element (15), which are mounted under said plates (7,8) and plates (13) to said basic body (6).

13. The hollow section support member for structural engineering of any of claim 1 to 12, wherein the tensioning force necessary for said composite support member (3) is transferred by said tensioning rods (9) and (14), said tensioning nuts (10,11) and the plates (7,8) to said basic body (1) and said basic body (6).

## Revendications

1. Elément porteur sous forme de profilé creux pour technique de construction, tel que pilier ou poutre, consistant en au moins un corps de base constitué de couches d'un matériau en nappe enroulées et réunies pour former un profilé creux, caractérisé en ce que
• la paroi du corps de base est constituée d'un grand nombre de couches de papier,
• les couches sont constituées de bandes qui sont enroulées hélicoïdalement en se chevauchant,
• les couches sont réunies par une colle résistante à l'eau,
• la section de l'élément porteur (1) reste égale sur toute la longueur.

2. Elément porteur sous forme de profilé creux pour technique de construction selon revendication 1, caractérisé en ce qu'une couche de tissu, constituée de fibres naturelles ou de fibres artificielles, est intercalée à intervalles réguliers entre les couches de papier.

3. Elément porteur sous forme de profilé creux pour technique de construction selon l'une des revendications 1 ou 2, caractérisé en ce que le corps de base de l'élément porteur (1) est constitué d'une poutre composite (2) qui est formée de deux corps de base (4, 5) dont le plus petit (5) a un diamètre extérieur correspondant à peu près au diamètre intérieur du plus grand des corps de base (4), et qui sont enfoncés coaxialement l'un dans l'autre et collés.

4. Elément porteur sous forme de profilé creux pour technique de construction selon l'une des revendications 1 à 3, caractérisé en ce que le corps de base de l'élément porteur (1) est constitué d'une poutre composite (3) chez laquelle, dans un corps de base (1) d'un grand diamètre, trois corps de base ou plus (6) d'une diamètre plus petit sont enfoncés coaxialement et collés.

5. Elément porteur sous forme de profilé creux pour technique de construction selon l'une des revendications 1 à 4, caractérisé en ce que la paroi extérieure de l'élément porteur est imbibée ou revêtue de substances étanches à l'eau ou résistantes au feu telles que la résine artificielle, le verre soluble, les solutions de sel borique, etc.

6. Elément porteur sous forme de profilé creux pour technique de construction selon l'une des revendications 1 à 5, caractérisé en ce que l'élément porteur (1) est précontraint dans le sens de la longueur.

7. Elément porteur sous forme de profilé creux selon les revendications 1 à 6, caractérisé en ce que
• les extrémités des corps de base (1, 2 , 3) des éléments porteurs sont pourvues de plaques rondes (7, 8), dont le diamètre correspond au diamètre extérieur des corps de base (1, 2 , 3), et qui présentent une perforation en leur milieu,
• un tirant (9) muni d'un filetage aux deux extrémités passe à travers la perforation, en exerçant une contrainte de compression sur les corps de base (1, 2 , 3) au moyen des écrous de serrage (10, 11) par l'intermédiaire des plaques (7, 8).

8. Elément porteur sous forme de profilé creux selon les revendications 1 à 7, caractérisé en ce que les plaques rondes (7, 8) sont conçues sous forme de pot, de sorte que les écrous de serrage (10, 11) sont disposés dans le contour extérieur du corps de base (1, 2, 3).

9. Elément porteur sous forme de profilé creux selon les revendications 1 à 8, caractérisé en ce que les plaques rondes (7, 8) sont conçues sous forme de pot dont le rebord (12) recouvre la paroi extérieure du corps de base (1, 2, 3), de sorte que les écrous de serrage (10, 11) sont disposés dans le contour extérieur du corps de base (1, 2, 3).

10. Elément porteur sous forme de profilé creux selon les revendications 1 à 8, caractérisé en ce que sur la poutre composite (3), chacun des corps de base (1, 6) est précontraint au moyen de plaques rondes (7) ou (13), de tirants (9) ou (14) et d'écrous (10, 11).

11. Elément porteur sous forme de profilé creux selon les revendications 1 à 10, caractérisé en ce que sur la poutre composite (3) les corps de base (1, 6) sont précontraints avec une plaque ronde (7), un tirant (9) et des écrous de serrage (10, 11).

12. Elément porteur sous forme de profilé creux selon les revendications 1 à 11, caractérisé en ce que sur la poutre composite (3), l'effort de tension nécessaire est transmis au corps de base (1) par le tirant (9), les écrous de serrage (10, 11) et les plaques (7, 8), et aux corps de base (6) par l'intermédiaire d'éléments de ressort (15) qui sont disposés entre la face inférieure des plaques (7, 8) et les plaques 13.

13. Elément porteur sous forme de profilé creux selon les revendications 1 à 12, caractérisé en ce que sur la poutre composite (3), l'effort de tension nécessaire est transmis au corps de base (1) et aux corps de base (6) par les tirants (9) et 14, les écrous de serrage (10, 11) et la plaque (7, 8).
